# EUROPEAN PATENT APPLICATION

(11) **EP 4 708 949 A1**
(43) Date of publication of application: **11.03.2026**
(21) Application number: 24818444.2
(22) Date of filing: 14.05.2024
(51) Int. Cl.: H04W 12/72

(54) **COMMUNICATION METHOD AND COMMUNICATION APPARATUS**

(30) Priority: 05.06.2023 CN 202310656175
(71) Applicant: Huawei Technologies Co., Ltd., Shenzhen, Guangdong 518129 (CN)
(72) Inventor: HAN, Zhilin, Shenzhen, Guangdong 518129 (CN); XU, Yishan, Shenzhen, Guangdong 518129 (CN)
(74) Representative: Isarpatent
(86) International application number: PCT/CN2024/092960
(87) International publication number: WO 2024/250911

(57) **Abstract**

This application provides a communication method and apparatus. In the method, a core network receives an operation request for a passive terminal from at least one application function network element, and the core network allows the at least one application function network element to perform an operation on the passive terminal only when determining that the passive terminal belongs to a set of shared terminals. The passive terminal in the set of shared terminals is allowed to be used by the at least one application function network element. According to embodiments of this application, data security can be ensured.

## Description

This application claims priority to Chinese Patent Application No. 202310656175.7, filed with the China National Intellectual Property Administration on June 5, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

The internet of things (internet of things, IoT), as a part of 5G, is experiencing rapid growth in market demand. Existing internet of things technologies include narrowband (narrowband) internet of things, reduced capability (reduced capacity, RedCap) user equipment, and the like, and power consumption of the conventional technologies still remains in milliwatt range and cannot be pushed any lower. However, the passive internet of things (Passive internet of things, P-IoT, also known as Ambient internet of things, A-IoT or Ambient power-enabled internet of things, A-IoT) technology can achieve microwatt-level power consumption and ultra-low costs, making it an important branch in future evolution of cellular technologies.

Some nodes (for example, passive terminal devices) in a P-IoT network may be passive. These nodes are not equipped with or do not depend on power supply devices; instead, they harvest energy from sources such as solar, radio frequency, wind, hydro, or tidal, to support data sensing, data transmission, and distributed computing.

The P-IoT technology can be used to track and manage managed objects across many sectors. It offers high accuracy, a long reading distance, a large capacity for data storage, and strong durability, and is widely applied to phases such as product production, logistics, and sales. In full supply chain scenarios, passive terminal devices provided by upstream enterprises may be used by all or some downstream enterprises in the full supply chain, and the upstream enterprises may provide information about the provided passive terminal devices for a core network. However, core network devices deployed by operators do not belong to any enterprise and can serve any enterprise. Therefore, how to ensure use security of passive terminal devices is an urgent problem to be resolved.

### SUMMARY

This application provides a communication method and a communication apparatus, to ensure data security.

According to a first aspect, a communication method is provided. The method may be performed by a core network, or may be performed by a chip or a circuit disposed in the core network. This is not limited in this application.

The method may include: receiving first operation request information from a first application function network element, and receiving second operation request information from a second application function network element, where the first operation request information is for requesting to perform a first operation on a first passive terminal, and the second operation request information is for requesting to perform a second operation on the first passive terminal; and determining that the first passive terminal belongs to a set of shared terminals, and performing the first operation and the second operation, where the set of shared terminals includes at least the first passive terminal, and the first passive terminal in the set of shared terminals is allowed to be used by the first application function network element and the second application function network element.

Specifically, the "receiving the first operation request information from the first application function network element" and the "receiving the second operation request information from the second application function network element" may occur simultaneously, or may not occur simultaneously. This is not limited in this application. In addition, other operation information from another application function network element may be further received. This is not limited in this application.

Specifically, the first passive terminal may be a tag, and correspondingly, the set of shared terminals may also be referred to as a shared tag set. Based on different service scenarios, the first passive terminal may alternatively be in another form. For example, the first passive terminal may alternatively be a passive temperature measurement terminal or a passive optical fiber terminal. This is not limited in this application.

When any application function network element (or enterprise) sends operation request information to a passive terminal, in the foregoing method, the operation request information may be determined, to prevent the application function network element from performing an operation on a passive terminal that the application function network element does not allow to perform an operation, so as to ensure data security.

Specifically, the first operation request information includes first information, and the first information includes at least one of the following information:
an identifier of the first application function network element, an identifier of an application function network element group to which the first application function network element belongs, an identifier of the first passive terminal, an operation area of the first operation, an operation type of the first operation, and the like.

With reference to the first aspect, in some implementations of the first aspect, the performing the first operation further includes: determining that the first information meets second information corresponding to the first passive terminal, and performing the first operation.

Specifically, the second information corresponding to the first passive terminal may be subscription information corresponding to the first passive terminal, application information corresponding to the first passive terminal, policy information corresponding to the first passive terminal, open information corresponding to the first passive terminal, context information corresponding to the first passive terminal, or the like.

Specifically, the second information corresponding to the first passive terminal includes at least one of the following information:
an identifier of a third application function network element to which the first passive terminal belongs, identifiers of a plurality of application function network elements allowed to use the first passive terminal, an identifier of an application function network element group allowed to use the first passive terminal, an operation type of an operation allowed to be performed by each of the plurality of application function network elements on the first passive terminal, an operation area in which each of the plurality of application function network elements is allowed to perform an operation on the first passive terminal, and the like.

Specifically, the third application function network element may be the first application function network element, or may be the second application function network element, or may be another application function network element. This is not limited in this application.

In the foregoing method, information carried in the operation request information is compared with the subscription information, and execution of an operation request that meets the subscription information is allowed, to ensure data security.

With reference to the first aspect, in some implementations of the first aspect, the determining that the first passive terminal belongs to the set of shared terminals includes: An access and mobility management network element sends first query information to a unified data management network element, where the first query information is for querying the second information corresponding to the first passive terminal; the access and mobility management network element receives first feedback information from the unified data management network element, where the first feedback information is determined based on the first query information; and the access and mobility management network element determines, based on the first feedback information, that the first passive terminal belongs to the set of shared terminals.

Specifically, the second information that the first query information is for querying may include: the identifier of the third application function network element to which the first passive terminal belongs, the identifier of the plurality of application function network elements allowed to use the first passive terminal, and the identifier of the application function network element group allowed to use the first passive terminal.

That is, the access and mobility management network element may determine, by determining, based on the first feedback information, that the first passive terminal is allowed to be used by the first application function network element, that the first passive terminal belongs to the set of shared terminals.

Alternatively, the determining that the first passive terminal belongs to the set of shared terminals includes: The access and mobility management network element receives fourth information from the third application function network element, where the fourth information includes the second information corresponding to the first passive terminal; and the access and mobility management network element determines, based on the fourth information, that the first passive terminal belongs to the set of shared terminals.

When determining that the first passive terminal belongs to the set of shared terminals, the access and mobility management network element may directly determine, or may determine, based on a query result from the unified data management network element, that the first passive terminal belongs to the set of shared terminals.

Alternatively, the determining that the first passive terminal belongs to the set of shared terminals includes: The unified data management network element determines, based on the first query information, that the first passive terminal belongs to the set of shared terminals, where the first query information includes the first information, and the first feedback information indicates, to the access and mobility management network element, that the first passive terminal belongs to the set of shared terminals.

In the foregoing method, the first operation is performed when it is determined that the first passive terminal can be used by the first application function network element, so that a risk of data theft can be reduced.

With reference to the first aspect, in some implementations of the first aspect, the determining that the first passive terminal belongs to the set of shared terminals includes: The access and mobility management network element sends a first operation instruction, where the first operation instruction includes the identifier of the first application function network element or the identifier of the application function network element group to which the first application function network element belongs; the access and mobility management network element receives first indication information from the first passive terminal, where the first indication information indicates that the first passive terminal is allowed to be used by the first application function network element; and the access and mobility management network element determines, based on the first indication information, that the first passive terminal belongs to the set of shared terminals.

Specifically, the first passive terminal is configured with the identifiers of the plurality of application function network elements allowed to use the first passive terminal and/or the identifier of the application function network element group allowed to use the first passive terminal.

Specifically, the first indication information may be identification information of the first passive terminal.

In the foregoing method, the first passive terminal determines whether the first passive terminal belongs to the set of shared terminals, and indicates, to the access and mobility management network element, whether the first passive terminal belongs to the set of shared terminals, so that processing complexity of the access and mobility management network element can be reduced.

With reference to the first aspect, in some implementations of the first aspect, the performing the first operation includes: The access and mobility management network element determines, based on the first feedback information, that the first information meets the second information corresponding to the first passive terminal, and performs the first operation.

Specifically, the second information that the first query information is for querying may include: the identifier of the third application function network element to which the first passive terminal belongs, the identifiers of the plurality of application function network elements allowed to use the first passive terminal, the identifier of the application function network element group allowed to use the first passive terminal, the operation type of an operation allowed to be performed by each of the plurality of application function network elements on the first passive terminal, the operation area in which each of the plurality of application function network elements is allowed to perform an operation on the first passive terminal, and the like.

Alternatively, the performing the first operation includes: The unified data management network element determines, based on the first query information, that the first information meets the second information corresponding to the first passive terminal, where the first query information includes the first information, and the first feedback information indicates, to the access and mobility management network element, that the first operation is allowed to be performed.

In the foregoing method, information carried in the operation request information is compared with the subscription information, and execution of an operation request that meets the subscription information is allowed, to ensure data security.

With reference to the first aspect, in some implementations of the first aspect, the method further includes: The access and mobility management network element sends fourth query information to a fourth application management network element, where the fourth query information is used by the fourth application function network element to determine to allow the first application function network element to perform the first operation on the first passive terminal, and the fourth query information includes the first information; the access and management network element receives fourth feedback information from the fourth application management network element, where the fourth feedback information indicates that the first operation is allowed to be performed; and the access and mobility management network element performs the first operation based on the fourth feedback information.

Specifically, the fourth application function network element may be an application function network element configured to manage the first passive terminal, for example, may be the first application function network element, the second application function network element, or the third application function network element. This is not limited in this application.

In the foregoing method, when a core network side (for example, the access and mobility management network element or the unified data management network element) does not obtain all information in the second information corresponding to the first passive terminal, the fourth application function network element assists in determining whether to allow the first operation to be performed, so that data security can be ensured.

According to a second aspect, a communication method is provided. The method may be performed by a first passive terminal, or may be performed by a chip or a circuit disposed in the first passive terminal. This is not limited in this application.

The method may include: The first passive terminal receives third information from an access network device, where the third information includes an identifier of a first application function network element or an identifier of an application function network element group to which the first application function network element belongs, and the first application function network element is an application function network element that requests to perform a first operation on the first passive terminal; and the first passive terminal sends first indication information based on the third information, where the first indication information indicates that the first passive terminal is allowed to be used by the first application function network element.

Specifically, the first passive terminal is configured with identifiers of a plurality of application function network elements allowed to use the first passive terminal and/or an identifier of an application function network element group allowed to use the first passive terminal.

Specifically, the first indication information may be identification information of the first passive terminal.

In the foregoing method, the first passive terminal determines whether the first passive terminal belongs to the set of shared terminals, and indicates, to the access and mobility management network element, whether the first passive terminal belongs to the set of shared terminals, so that processing complexity of the access and mobility management network element can be reduced.

According to a third aspect, a communication apparatus is provided. The communication apparatus includes a communication unit and a processing unit. The communication unit is configured to receive first operation request information from a first application function network element, and is configured to receive second operation request information from a second application function network element, where the first operation request information is for requesting to perform a first operation on a first passive terminal, and the second operation request information is for requesting to perform a second operation on the first passive terminal. The processing unit is configured to determine that the first passive terminal belongs to a set of shared terminals, and is configured to perform the first operation and the second operation, where the set of shared terminals includes at least the first passive terminal, and the first passive terminal in the set of shared terminals is allowed to be used by the first application function network element and the second application function network element.

With reference to the third aspect, in some implementations of the third aspect, the first operation request information includes first information, and the first information includes at least one of the following information:
an identifier of the first application function network element, an identifier of an application function network element group to which the first application function network element belongs, an identifier of the first passive terminal, an operation area of the first operation, an operation type of the first operation, and the like. That the processing unit is configured to perform the first operation further includes: The processing unit is configured to determine that the first information meets second information corresponding to the first passive terminal, and is configured to perform the first operation.

With reference to the third aspect, in some implementations of the third aspect, the second information includes at least one of the following information:
an identifier of a third application function network element to which the first passive terminal belongs, identifiers of a plurality of application function network elements allowed to use the first passive terminal, an identifier of an application function network element group allowed to use the first passive terminal, an operation type of an operation allowed to be performed by each of the plurality of application function network elements on the first passive terminal, an operation area in which each of the plurality of application function network elements is allowed to perform an operation on the first passive terminal, and the like.

With reference to the third aspect, in some implementations of the third aspect, that the processing unit is configured to determine that the first passive terminal belongs to the set of shared terminals includes: The communication unit is configured to send first query information to a unified data management network element, where the first query information is for querying the second information corresponding to the first passive terminal; the communication unit is further configured to receive first feedback information from the unified data management network element, where the first feedback information is determined based on the first query information; and the processing unit determines, based on the first feedback information, that the first passive terminal belongs to the set of shared terminals.

With reference to the third aspect, in some implementations of the third aspect, that the processing unit is configured to determine that the first passive terminal belongs to the set of shared terminals includes: The communication unit is configured to send a first operation instruction, where the first operation instruction includes the identifier of the first application function network element or the identifier of the application function network element group to which the first application function network element belongs; the communication unit is configured to receive first indication information from the first passive terminal, where the first indication information indicates that the first passive terminal is allowed to be used by the first application function network element, and the first passive terminal includes the identifiers of the plurality of application function network elements allowed to use the first passive terminal and/or the identifier of the application function network element group allowed to use the first passive terminal; and the processing unit is configured to determine, based on the first indication information, that the first passive terminal belongs to the set of shared terminals.

With reference to the third aspect, in some implementations of the third aspect, that the processing unit is configured to perform the first operation includes: The processing unit is configured to determine, based on the first feedback information, that the first information meets the second information corresponding to the first passive terminal, and is configured to perform the first operation.

With reference to the third aspect, in some implementations of the third aspect, that the processing unit is configured to perform the first operation includes: The communication unit is configured to send fourth query information to a fourth application management network element, where the fourth query information is used by the fourth application function network element to determine to allow the first application function network element to perform the first operation on the first passive terminal, and the fourth query information includes the first information; the communication unit is configured to receive fourth feedback information from the fourth application management network element, where the fourth feedback information indicates that the first operation is allowed to be performed; and the processing unit is configured to perform the first operation based on the fourth feedback information.

For explanations of related content and beneficial effects of the communication apparatus provided in the third aspect, refer to the communication method shown in the first aspect. Details are not described herein again.

According to a fourth aspect, a communication apparatus is provided. The communication apparatus includes a communication unit and a processing unit. The communication unit is configured to receive third information from an access network device, where the third information includes an identifier of a first application function network element or an identifier of an application function network element group to which the first application function network element belongs, and the first application function network element is an application function network element that requests to perform a first operation on the first passive terminal; and the processing unit is configured to send first indication information based on the third information, where the first indication information indicates that the communication apparatus is allowed to be used by the first application function network element, and the apparatus includes identifiers of a plurality of application function network elements allowed to use the apparatus and/or an identifier of an application function network element group allowed to use the first passive terminal.

For explanations of related content and beneficial effects of the communication apparatus provided in the fourth aspect, refer to the communication method shown in the second aspect. Details are not described herein again.

According to a fifth aspect, a communication apparatus is provided. The communication apparatus includes a processor. The processor is coupled to a memory, and may be configured to execute instructions in the memory, to implement the method according to any one of the first aspect and the possible implementations of the first aspect. Optionally, the apparatus further includes the memory. Optionally, the apparatus further includes a communication interface, and the processor is coupled to the communication interface.

In an implementation, the apparatus is a core network device. When the apparatus is the core network device, the communication interface may be a transceiver or an input/output interface.

In another implementation, the apparatus is a chip disposed in the core network device. When the apparatus is the chip disposed in the core network device, the communication interface may be the input/output interface.

In another implementation, the apparatus is a chip or a chip system.

Optionally, the transceiver may be a transceiver circuit. Optionally, the input/output interface may be an input/output circuit.

According to a sixth aspect, a communication apparatus is provided. The communication apparatus includes a processor. The processor is coupled to a memory, and may be configured to execute instructions in the memory, to implement the method according to any one of the second aspect and the possible implementations of the second aspect. Optionally, the apparatus further includes the memory. Optionally, the apparatus further includes a communication interface, and the processor is coupled to the communication interface.

In an implementation, the apparatus is a first passive terminal. When the apparatus is the first passive device, the communication interface may be a transceiver or an input/output interface.

In another implementation, the apparatus is a chip disposed in the first passive terminal. When the apparatus is the chip disposed in the first passive terminal, the communication interface may be the input/output interface.

In another implementation, the apparatus is a chip or a chip system.

Optionally, the transceiver may be a transceiver circuit. Optionally, the input/output interface may be an input/output circuit.

According to a seventh aspect, a computer-readable storage medium is provided. The computer-readable storage medium stores computer instructions, and when the computer instructions are executed by an apparatus, the apparatus is caused to implement the method according to any one of the first aspect and the possible implementations of the first aspect.

According to an eighth aspect, a computer-readable storage medium is provided. The computer-readable storage medium stores computer instructions, and when the computer instructions are executed by an apparatus, the apparatus is caused to implement the method according to any one of the second aspect and the possible implementations of the second aspect.

According to a ninth aspect, a computer program product including instructions is provided. The computer program product includes a computer program. When the computer program is executed by an apparatus, the apparatus is caused to implement the method according to any one of the first aspect and the possible implementations of the first aspect.

According to a tenth aspect, a computer program product including instructions is provided. The computer program product includes a computer program. When the computer program is executed by an apparatus, the apparatus is caused to implement the method according to any one of the second aspect and the possible implementations of the second aspect.

According to an eleventh aspect, a communication system is provided. The communication system includes the foregoing core network device and first passive terminal.

### BRIEF DESCRIPTION OF DRAWINGS

FIG. 1 is a diagram of an architecture of a communication system to which this application is applicable;
(a) in FIG. 2 is a diagram of a communication scenario to which this application is applicable;

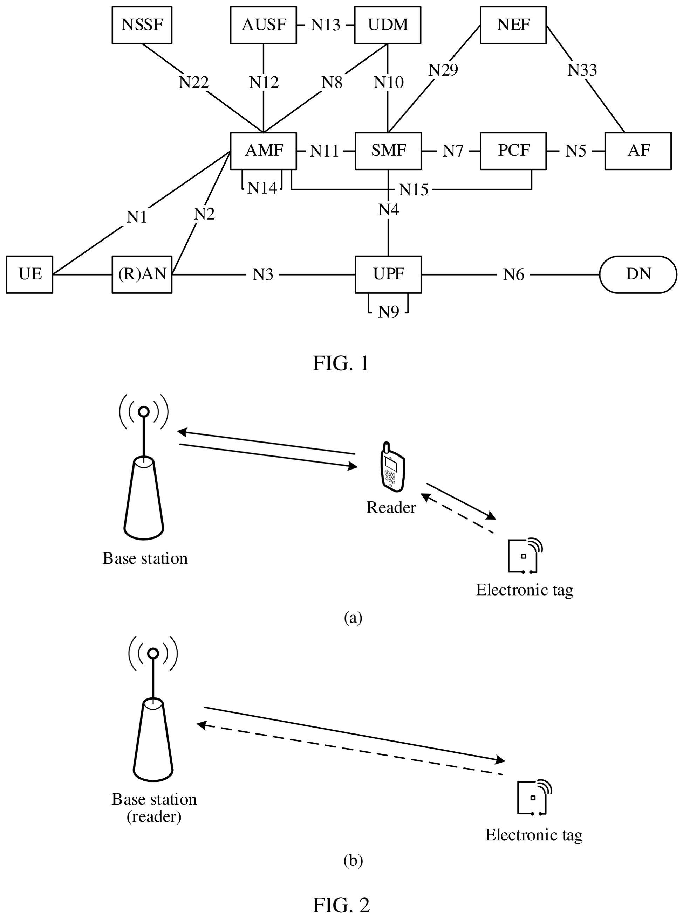

(b) in FIG. 2 is a diagram of another communication scenario to which this application is applicable;

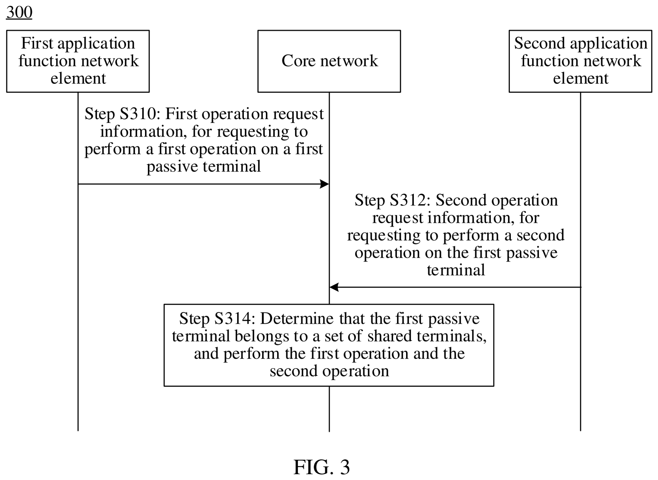

FIG. 3 is a schematic flowchart of a communication method 300 for ensuring data security according to this application;

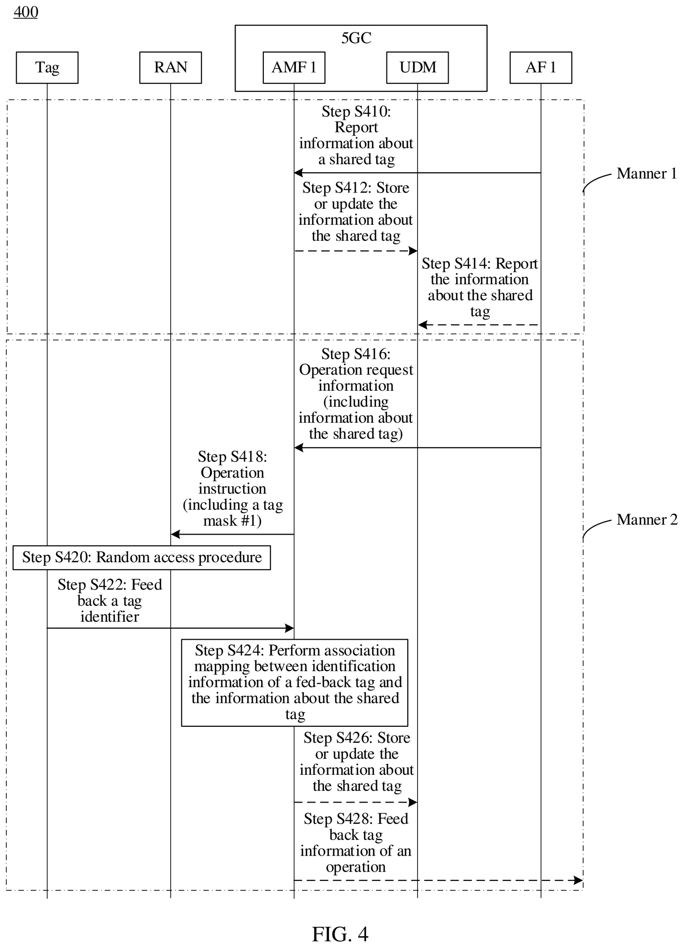

FIG. 4 is a schematic flowchart of a communication method 400 for ensuring data security according to this application;

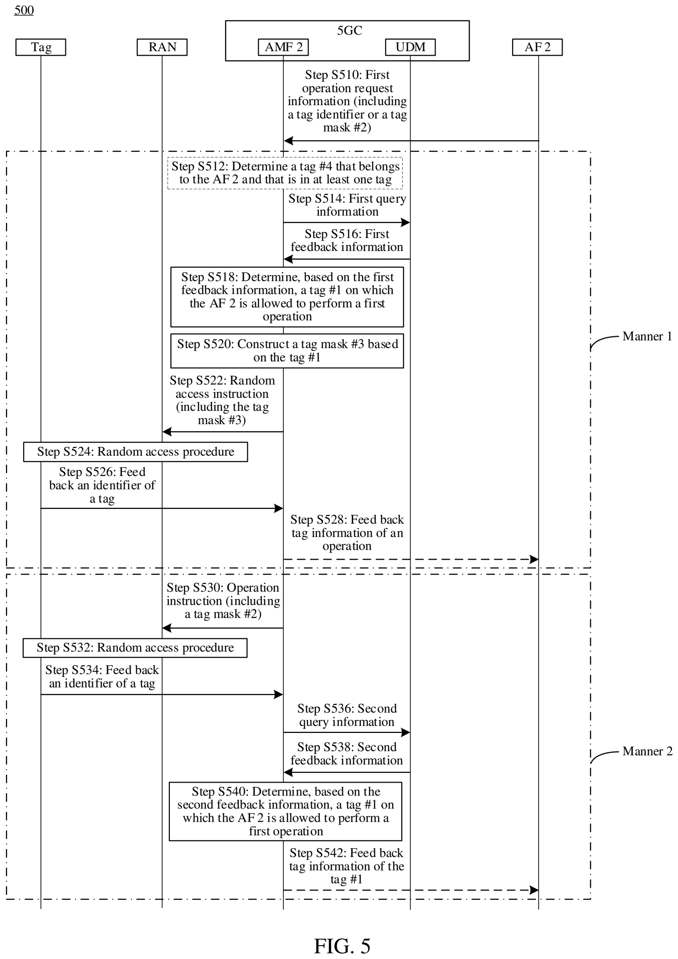

FIG. 5 is a schematic flowchart of a communication method 500 for ensuring data security according to this application;

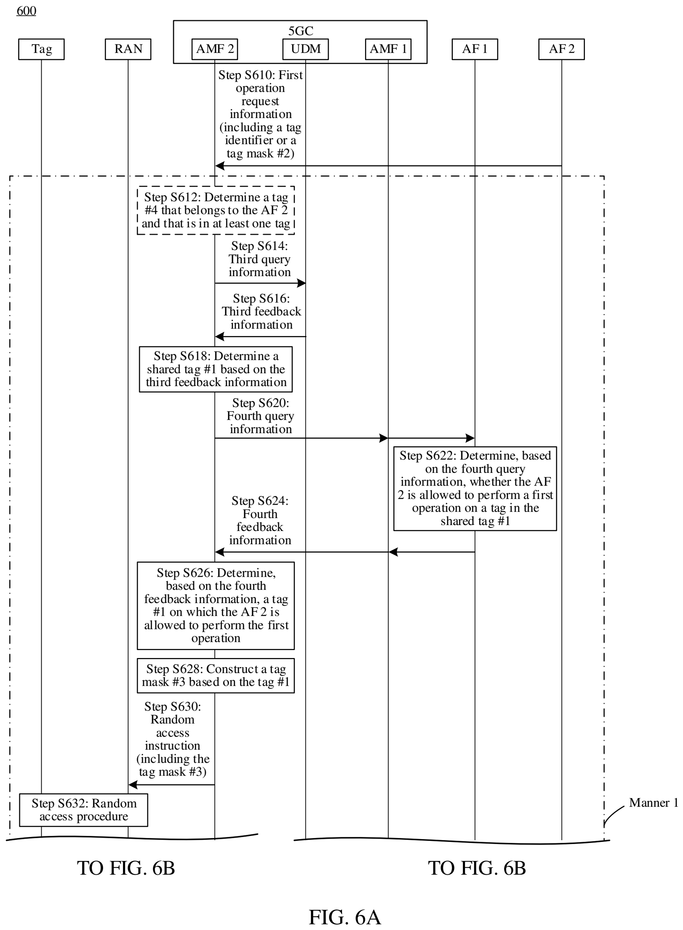

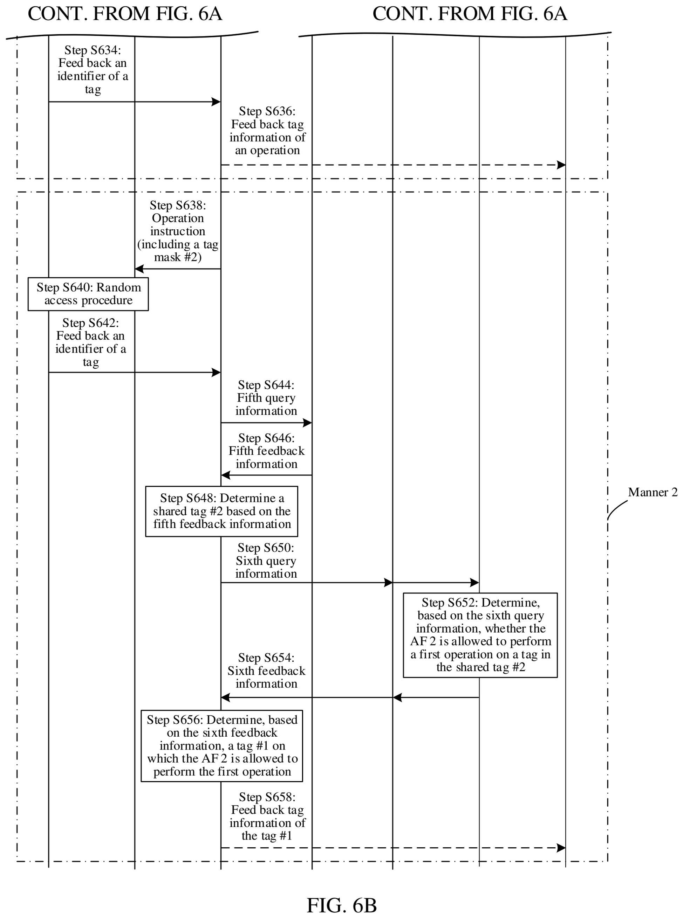

FIG. 6A and FIG. 6B are a schematic flowchart of a communication method 600 for ensuring data security according to this application;

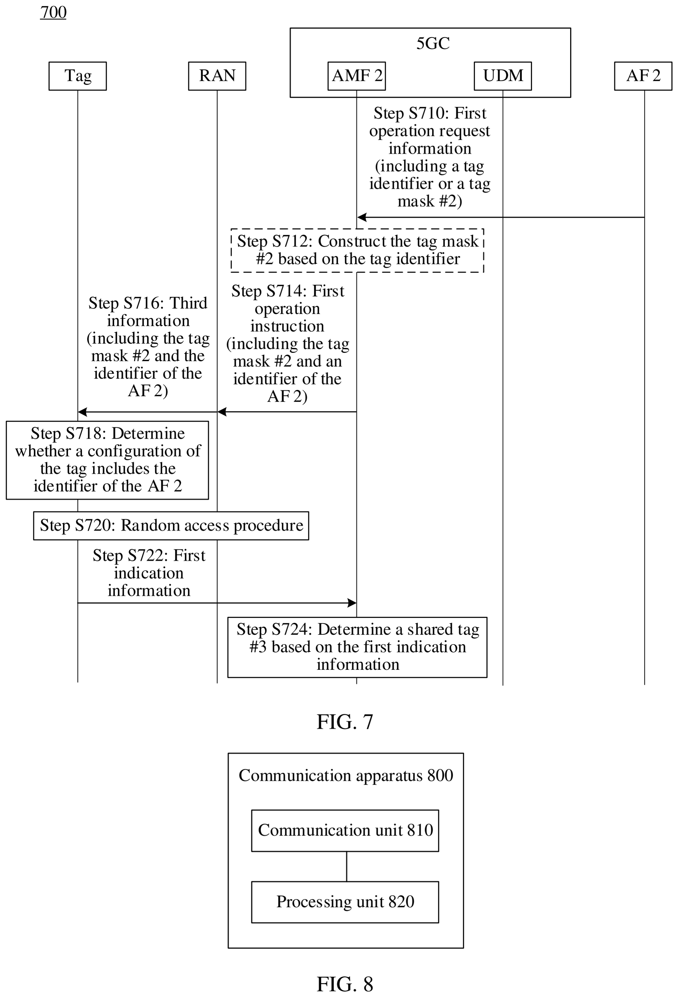

FIG. 7 is a schematic flowchart of a communication method 700 for ensuring data security according to this application;
FIG. 8 is a block diagram of a communication apparatus 800 according to an embodiment of this application;

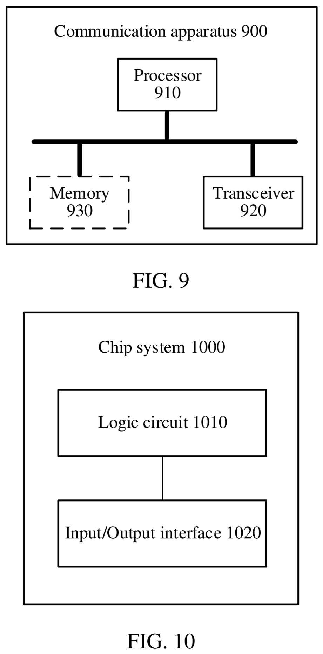

FIG. 9 is a block diagram of a communication apparatus 900 according to an embodiment of this application; and
FIG. 10 is a diagram of a chip system 1000 according to an embodiment of this application.

### DESCRIPTION OF EMBODIMENTS

The following describes technical solutions of this application with reference to accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex system (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future communication system.

FIG. 1 is an example of an architecture of a communication system to which an embodiment of this application is applicable. Functions of a terminal device and network entities are described below.

UE shown in FIG. 1 represents a terminal. The terminal may be any device that can provide voice and/or data connectivity for users, and may communicate with one or more core networks through a radio access network (radio access network, RAN). The terminal may also be referred to as a terminal (terminal) device, a terminal device unit (subscriber unit), a terminal device station, a terminal device agent, a terminal device apparatus, an access terminal, a terminal in V2X communication, a subscriber unit, user equipment (user equipment, UE), a subscriber station, a mobile station (mobile station, MS), a remote station, a remote terminal, a mobile device, a user terminal, a wireless communication device, a user agent, or a user apparatus.

The terminal in embodiments of this application may alternatively be a mobile phone (mobile phone), a tablet computer (pad), a computer having a wireless transceiver function, a holographic projector, a video player, a virtual reality (virtual reality, VR) terminal, an augmented reality (augmented reality, AR) terminal, a wireless terminal in industrial control (industrial control), a terminal in an internet of things (internet of things, IoT) system, a tactile terminal device, a vehicle-mounted terminal device, a road side unit (road side unit, RSU), a wireless terminal in self-driving (self-driving), a communication terminal in an uncrewed aerial vehicle, a wireless terminal in telemedicine (remote medical), a wireless terminal in a smart grid (smart grid), a wireless terminal in transportation safety (transportation safety), a wireless terminal in transportation safety, a wireless terminal in a smart city (smart city), a wireless terminal in smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved network, or the like.

The wearable device may also be referred to as a wearable intelligent device, and is a generic term for wearable devices such as head-mounted display XR glasses, gloves, watches, clothes, and shoes that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, for example, smart watches or smart glasses, and include devices that dedicated to one type of application function and need to collaboratively work with other devices such as smartphones, for example, various smart bands, or smart jewelry for monitoring physical signs.

The terminal may be used in various communication scenarios, for example, device-to-device (device-to-device, D2D) communication, vehicle to everything (vehicle to everything, V2X) communication, machine-type communication (machine-type communication, MTC), internet of things (internet of things, IoT), virtual reality (virtual reality, VR), augmented reality (augmented reality, AR), industrial control (industrial control), self-driving (self-driving), telemedical (telemedical), smart grid (smart grid), smart furniture, smart office, smart wearable, smart transportation, or smart city (smart city). The terminal device may be a mobile phone (mobile phone), a tablet computer (pad), a computer with a wireless transceiver function, a wearable device, an aerospace device, an uncrewed aerial vehicle device, or the like. In embodiments of this application, a chip used in the foregoing device may also be referred to as a terminal.

The (R)AN in FIG. 1 represents a (radio) access network (radio access network, RAN) device. The RAN device is a device that connects a terminal to a wireless network. The RAN device is a network including a plurality of 5G-RAN nodes, and implements functions of a radio physical layer, resource scheduling and radio resource management, quality of service management, data compression and encryption, radio access control, and mobility management. A 5G-RAN is connected to a user plane function (user plane function, UPF) network element through a user plane interface N3, to transmit data of the terminal device. The 5G-RAN establishes a control plane signaling connection with an access and mobility management function (access and mobility management function, AMF) network element through a control plane interface N2, to implement functions such as radio access bearer control. The RAN may be any device with a wireless transceiver function, including but not limited to a 5G NodeB (5G node base, gNB), an evolved NodeB (evolved node base, eNB), a wireless access point (wireless access point, Wi-Fi AP), a world interoperability for microwave access base station (world interoperability for microwave access base station, WiMAX BS), a transmission receiving point (transmission receiving point, TRP), a wireless relay node, a wireless backhaul node, or the like.

The access network device in embodiments of this application may be a base transceiver station (base transceiver station, BTS) in a global system for mobile communications (global system for mobile communications, GSM) or a code division multiple access (code division multiple access, CDMA) system, a NodeB (nodeB, NB) in a wideband code division multiple access (wideband code division multiple access, WCDMA) system, an evolved NodeB (evolved node base, eNB) in an LTE system, or a radio controller in a cloud radio access network (cloud radio access network, CRAN) scenario. Alternatively, the access network device may be a relay station, an access point, a vehicle-mounted device, a wearable device, an access network device in a future 5G network, or an access network device in a future evolved PLMN network. This is not limited in embodiments of this application.

The base station may be a macro base station, a pole base station, a micro base station, a pico base station, a small cell, a relay station, a balloon station, or the like.

The AMF in FIG. 1 is a core network element. The AMF is mainly responsible for UE access management, mobility management, network slice selection, SMF selection, and the like. In addition, the AMF is further responsible for transferring user policies between a terminal and a policy control function (policy control function, PCF).

An SMF in FIG. 1 is mainly responsible for a control plane function of terminal session management, including selection and control of the user plane function (user plane function, UPF), internet protocol (internet protocol, IP) address allocation, session establishment, session QoS management, and obtaining policy and charging control (policy and charging control, PCC) policies (from the PCF).

The UPF in FIG. 1 serves as an anchor point of a protocol data unit (protocol data unit, PDU) session connection, is responsible for data packet filtering, data transmission/forwarding, rate control, charging information generation, and the like of the terminal, and provides a connection for a data network (data network, DN).

The DN in FIG. 1 refers to a specific data service network accessed by the terminal. The DN is responsible for providing operator services, internet access, or third-party services. The DN includes a server, and the server may implement video source encoding, rendering, and the like. A typical DN includes an internet network, an IP multimedia service (IP multimedia service, IMS) network, and the like. The DN is identified by a data network name (data network name, DNN) in a 5G network.

A unified data management (unified data management, UDM) network element in FIG. 1 is mainly configured to: manage and control user data, for example, manage subscription information, including obtaining subscription information from a unified data repository (unified data repository, UDR) and providing the subscription information for another network element (for example, the AMF); generate an authentication credential of the third generation partnership project (third generation partnership project, 3GPP) for the terminal; register and maintain a network element currently serving the terminal device, for example, the AMF currently serving the terminal (namely, a serving AMF); and be responsible for notifying a corresponding network element when subscription data is modified.

A network repository function (network repository function, NRF) network element in FIG. 1 is mainly configured to support registration and discovery of a network function.

A network exposure function (network exposure function, NEF) network element in FIG. 1 is configured to expose services and capabilities of a 3GPP network function to an application function (application function, AF), and also enables the AF to provide information for the 3GPP network function.

The AF in FIG. 1 interacts with a core network element to provide some services, for example, interacts with the PCF to perform service policy control, and interacts with the NEF to obtain some network capability information or provide some application information for a network, and provide some data network access point information for the PCF to generate routing information of a corresponding data service.

An authentication server function (authentication server function, AUSF) in FIG. 1 is used to perform security authentication on the terminal device when the terminal device accesses a network.

A network slice selection function (network slice selection function, NSSF) network element in FIG. 1 selects a slice instance set for the terminal device. A network slice instance that the terminal device is allowed to access is determined based on network slice selection assistance information (network slice selection assistance information, NSSAI), subscription information, and the like of the terminal device.

The PCF in FIG. 1 provides configuration policy information for the terminal device, provides policy information for a control plane network element (for example, the AMF or the SMF) of a network to manage and control the terminal device, and generates a terminal device access policy and a QoS flow control policy.

The terminal device in embodiments of this application is connected to the RAN device in a wireless manner, and the RAN device is connected to a 5G core network (5GC) device in a wireless or wired manner. The 5GC device and the RAN device may be different independent physical devices, or functions of the 5GC device and logical functions of the RAN device may be integrated into a same physical device, or a part of the functions of the 5GC device and a part of the functions of the RAN device may be integrated into one physical device. The terminal device may be located at a fixed position, or may be movable.

The 5GC device mainly includes the NEF network element, the PCF network element, the AF network element, the AMF network element, the UDM network element, the SMF network element, the UPF network element, and the like.

It should be noted that the foregoing "network element" may also be referred to as an entity, a device, an apparatus, a module, or the like, and there is no particular limitation in this application herein. In addition, in this application, for ease of understanding and description, descriptions of "network element" are omitted in some descriptions. For example, the AMF network element is referred to as an AMF for short. In this case, the "AMF" should be understood as an AMF network element or an AMF entity. Descriptions of same or similar cases are omitted below.

It should be noted that a name of each network element included in FIG. 1 is merely a name, and the name does not limit any function of the network element. In a 5G network and another future network, the foregoing network elements may alternatively have other names. This is not specifically limited in embodiments of this application. For example, in a 6G network, some or all of the foregoing network elements may still use terms in 5G, or may have other names. A general description is provided herein. Details are not described below again.

It should be noted that the network elements in FIG. 1 do not necessarily exist simultaneously, and required network elements may be determined based on a requirement. A connection relationship between the network elements in FIG. 1 is not uniquely determined, and may be adjusted based on a requirement.

It should be further understood that the foregoing names are merely used to distinguish between different functions, and do not represent that these network elements are independent physical devices. Specific forms of the foregoing network elements are not limited in this application. For example, the network elements may be integrated into a same physical device, or may be separately different physical devices. In actual deployment, the network elements or devices may be integrated. For example, the access and mobility management network element may be integrated with a session management network element. The session management network element may be integrated with a user plane network element. When two network elements are integrated, interaction between the two network elements provided in embodiments of this application becomes an internal operation of the integrated network element or may be omitted.

It may be understood that the foregoing network elements or functions may be network elements in a hardware device, or may be software functions running on dedicated hardware or virtualized functions instantiated on a platform (for example, a cloud platform).

For ease of understanding the technical solutions in this application, the following first briefly describes several technical names in this application.

Passive internet of things (passive internet of things, P-IoT, also known as Ambient internet of things, A-IoT, or Ambient power-enabled internet of things, A-IoT): Some nodes (for example, passive terminal devices) in a network may be passive. These nodes are not equipped with or do not depend on power supply devices; instead, they harvest energy from sources such as solar, radio frequency, wind, hydro, or tidal, to support data sensing, data transmission, and distributed computing of data. A P-IoT network architecture may include the passive terminal device, a reader (or a reader), a server, and the like.

Reader or reader/writer: It can communicate wirelessly with terminals via antennas, to implement operations such as reading or writing of terminal identifiers and memory data. A typical reader includes a high-frequency module (for example, a transmitter or a receiver), a control unit, and a reader antenna. The reader may alternatively be understood as a device communicating with terminals, and may be in a form of a terminal, a base station, or a device with a read/write function. In embodiments of this specification, a base station is used as an example of the reader, but this is not limited in practice.

A passive terminal device may be in a tag form, or may be in any other terminal form. In this application, an example in which the passive terminal device is in a tag form is used for description, but this is not limited in this application.

An electronic tag includes a tag antenna and a tag-specific chip. Generally, electronic tags can be classified into an active tag (active tag), a passive tag (passive tag), and a semi-passive tag (semi-passive tag) based on different power supply modes of the electronic tag. The active tag is equipped with a battery, the passive tag is not equipped with a battery, and the semi-passive tag is partially dependent on the battery. The electronic tags may be classified into a low-frequency electronic tag, a high-frequency electronic tag, an ultra-high-frequency electronic tag, and a microwave electronic tag based on different frequencies. Certainly, classification may alternatively be performed based on different encapsulation forms, and details are not described herein. The passive tag may also be referred to as a passive internet of things device (passive internet of things, IoT) or a passive terminal in this application.

FIG. 2 is a diagram of a scenario to which this application is applicable. As shown in FIG. 2, a terminal (for example, an electronic tag shown in FIG. 2) may be located in a coverage area provided by a reader (reader), and receive a radio frequency signal sent by the reader. The terminal (for example, a passive terminal) may send, by using energy obtained from an induced current, product information stored in a chip, or the terminal (for example, an active terminal) actively sends a signal of a frequency, the reader reads information and decodes the information, and then sends the information to a central information system for related data processing. Communication between the reader and the terminal may be considered as communication between terminals, as shown in (a) in FIG. 2. The communication between the reader and the terminal may alternatively be considered as communication between the terminal and a base station, as shown in (b) in FIG. 2. Uu interface transmission, that is, air interface transmission, is performed between the terminal or the reader and a macro base station (which may be referred to as a "macro station" for short) or a pole base station (which may be referred to as a "pole station" for short).

With rapid development of wireless communication, to meet and enrich increasing requirements of people, a fifth generation (5G) mobile communication system emerges. This can effectively cope with explosive growth of mobile data traffic in the future and support massive device connections and emergence of new services.

A market demand for an IoT as a part of 5G is growing rapidly. An existing internet of things technology includes a narrowband (narrowband) internet of things, reduced capability (reduced capacity, RedCap) user equipment, and the like. However, in the conventional technology, power consumption is still above a milliwatt level, and there is no way to further reduce the power consumption. A P-IoT technology can achieve microwatt-level power consumption and ultra-low costs, and becomes an important branch of future evolution of a cellular technology.

As mentioned above, the P-IoT technology can be used to track and manage managed objects in many fields, has features such as high accuracy, a long reading distance, a large capacity for data storage, and high durability, and is widely applied to phases such as product production, logistics, and sales. In a P-IoT scenario with a full supply chain, a passive terminal device provided by an upstream enterprise may be used by all or some downstream enterprises in the full supply chain, and the upstream enterprise may provide information about the provided passive terminal device for a core network. However, a core network device deployed by an operator does not belong to any enterprise and can serve any enterprise. Therefore, the core network device may provide the passive terminal device provided by the upstream enterprise for an enterprise that does not belong to the full supply chain, causing a data security problem.

In view of this, this application provides a communication method. The core network device may allow, based on a determined set of shared terminals, another enterprise to perform an operation on a passive terminal that belongs to the set of shared terminals, to ensure data security.

FIG. 3 shows a communication method 300 according to this application. As shown in FIG. 3, the method includes the following steps.

Step S310: A first application function network element sends first operation request information to a core network, where the first operation request information is for requesting to perform a first operation on a first passive terminal. Correspondingly, the core network receives the first operation request information.

Specifically, the first operation request information includes first information, and the first information further includes at least one of the following information:
an identifier of the first application function network element, an identifier of an application function network element group to which the first application function network element belongs, an identifier of the first passive terminal, an operation area of the first operation, an operation type of the first operation, and the like.

Specifically, the first operation may be any one of the following operations: an inventory operation (or a stocktaking operation), a read operation, a write operation, a deactivation operation, a positioning operation, a tag information obtaining operation, and the like.

Specifically, the inventory operation means to perform inventory on an existing passive terminal, and may also be understood as obtaining identification information of the passive terminal. After the passive terminal receives mask information and a flag bit specified by a reader, if information in a storage area of the passive terminal matches the received mask information, and the flag bit stored by the passive terminal is consistent with that indicated by the reader, the passive terminal may enter an inventory procedure, that is, the passive terminal initiates random access to the reader and completes a corresponding instruction of the reader.

Specifically, the read operation means to read data of the passive terminal. The passive terminal receives a read instruction sent by the reader, reads the data from the storage area of the passive terminal, and sends the data to the application function network element.

Specifically, the write operation means to write data into the passive terminal. The application function network element sends a write instruction, and the reader or a core network element performs a write operation on the passive terminal based on the write instruction, and writes the data into the storage area of the passive terminal.

Specifically, the positioning operation is to position the passive terminal. The application function network element obtains location information of the passive terminal, where the information may be reported by the passive terminal autonomously, or the application function network element sends an instruction, and the reader or the core network element positions the passive terminal based on the write instruction, to obtain the location information.

Specifically, the deactivation operation can disable or deactivate the passive terminal. The application function network element sends a deactivation instruction of a tag, and the reader or the core network element performs a disabling or deactivation operation on the passive terminal based on the deactivation instruction. In this case, the passive terminal is disabled or deactivated, and no other operations are performed subsequently.

Step S312: A second application function network element sends second operation request information to the core network, where the second operation request information is for requesting to perform a second operation on a second passive terminal. Correspondingly, the core network receives the second operation request information.

Specifically, the second operation request information further includes at least one of the following information:
an identifier of the second application function network element, an identifier of an application function network element group to which the second application function network element belongs, the identifier of the first passive terminal, an operation area of the second operation, an operation type of the second operation, and the like.

Specifically, the second operation may be any one of the following operations: an inventory operation (or an inventory operation), a read operation, a write operation, a positioning operation, a deactivation operation, a tag information obtaining operation, and the like.

Step S314: The core network determines that the first passive terminal belongs to a set of shared terminals, and performs the first operation and the second operation.

The set of shared terminals includes at least the first passive terminal, and the first passive terminal is allowed to be used by the first application function network element and the second application function network element.

Specifically, the set of shared terminals may further include the second passive terminal, a third passive terminal, and the like. This is not limited in this application.

Specifically, this application is described by using an example in which the core network receives the first operation request information of the first application function network element and the core network receives the second operation request information of the second application function network element. The core network may further receive operation request information that is sent by another application function network element and that is for performing another operation on another passive terminal. This is not limited in this application.

In addition, the core network may determine that the first information meets second information corresponding to the first passive terminal, and perform the first operation.

Specifically, the second information corresponding to the first passive terminal may be subscription data (subscription data) corresponding to the first passive terminal, data (application data) corresponding to the first passive terminal, policy data (policy data) corresponding to the first passive terminal, exposure data (exposure data) corresponding to the first passive terminal, or context data (context data) corresponding to the first passive terminal. The context data may be context data of the first passive terminal, context data of an application service network element to which the first passive terminal belongs, or the like.

Specifically, the second information may include at least one of the following information:
an identifier of a third application function network element to which the first passive terminal belongs, identifiers of a plurality of application function network elements allowed to use the first passive terminal, an operation type of an operation allowed to be performed by each of the plurality of application function network elements on the first passive terminal, an operation area in which each of the plurality of application function network elements is allowed to perform an operation on the first passive terminal, an identifier of an application function network element group allowed to use the first passive terminal, and the like.

The third application function network element may be the first application function network element, or may be the second application function network element, or may be any other application function network element. This is not limited in this application.

According to the method 300, the core network may determine information used by an enterprise to request to perform an operation on the passive terminal, to improve data security performance.

Specifically, the following describes in detail a method for obtaining the second information corresponding to the first passive terminal by the core network, for example, a method 400 shown in FIG. 4.

Specifically, in the following embodiments, it may be specifically considered that the core network includes an AMF network element and a UDM network element, the first application function network element is an AF 2, the third application function network element is an AF 1, and the first passive terminal is a first tag. Specific steps of the second application function network element are similar to specific steps of the first application function network element. Content of the second application function network element is not described in detail below again. For details, refer to the following steps of the AF 2.

Specifically, the core network may obtain, in the following two manners, the second information corresponding to the first tag.

### Manner 1:

Step S410: The AF 1 reports information about a shared tag to an AMF 1. The AMF 1 is an AMF corresponding to the AF 1.

Specifically, the AMF 1 may be an AMF network element, a tag management function (tag management function, TMF) network element, or a network element in which the AMF and the TMF are integrated. This is not limited in this application.

Specifically, the information about the shared tag reported by the AF 1 includes at least one of the following:
an identifier of at least one tag, an identifier of the AF 1, identifiers of a plurality of AFs allowed to use each of the at least one tag, an identifier of an AF group allowed to use each of the at least one tag, an operation type of an operation allowed to be performed by each of the plurality of AFs on each tag, information about an area in which each of the plurality of AFs is allowed to perform an operation on each tag, a shared tag indication, and the like.

Specifically, the at least one tag is a shared tag, and the at least one tag includes at least the first tag. The information about an area in which each of the plurality of AFs is allowed to perform an operation on each tag may be address information, for example, a tracking area (tracking area, TA), a cell identifier (cell identifier), longitude and latitude, and a coordinate value. The shared tag indication indicates that a tag is a shared tag or to remove the tag from the shared tag.

Specifically, if a tag is a shared tag, the tag reported by the AF 1 and the plurality of AFs allowed to use the tag may indicate that the tag is the shared tag. In this case, the shared tag indication of the tag in the reported information about the shared tag is optional. If the shared tag indication indicates to remove the tag from the shared tag, the shared tag indication of the tag in the reported information about the shared tag is mandatory.

Generally, information exchange between the AF and the AMF 1 may be performed through an NEF. For brevity, this is not shown in the accompanying drawings in this application.

Step S412: The AMF 1 stores, in the UDM or a UDR, the information about the shared tag reported by the AF 1.

Specifically, the information about the shared tag may be directly stored in the UDM or the UDR to generate subscription data, and/or the information about the shared tag may be for updating subscription data already stored in the UDM or the UDR. Subscription data corresponding to the first tag is the second information corresponding to the first tag.

Specifically, the subscription data stored in the UDM or the UDR may be queried by using a tag identifier as an index, or may be queried by using an AF identifier as an index, or may be queried by using an AF group identifier as an index.

For example, subscription data queried by using a tag identifier as an index is shown in the following Table 1, where either an available enterprise identifier or an available enterprise group identifier may be selected. Both area information and an operation type are optional information.

**Table 1**

| Tag identifier | Enterprise identifier | Available enterprise identifier | Available enterprise group identifier | Area information | Operation type |
|---|---|---|---|---|---|
| ID 1 | AF 1 | AF 1 | Group 1 | Cell 1 | All |
| | | AF 2 | Group 2 | Cell 2 | Read |

For example, subscription data queried by using an AF identifier as an index is shown in the following Table 2.

**Table 2**

| Enterprise identifier | Available tag identifier | Area information | Operation type | Shared tag (Yes/No) |
|---|---|---|---|---|
| AF 1 | ID 1 | Cell 1 | All | Yes |
| | ID 2 | Cell 1 and cell 5 | Read | No |
| AF 2 | ID 1 | Cell 2 | Read | Yes |
| | ID 3 | Cell 4 | Inventory | No |

For example, subscription data queried by using an AF group identifier as an index is shown in the following Table 3.

**Table 3**

| Enterprise group identifier | Available tag identifier | Area information | Operation type |
|---|---|---|---|
| Group 1 | ID 1 | Cell 1 | Inventory |
| | ID 2 | Cell 2 | Read |

Optionally, in step S414, the AF 1 may also directly report the information about the shared tag to the UDM or the UDR.

### Manner 2:

Step S416: The AF 1 sends operation request information to an AMF 1.

Specifically, the operation request information includes the information about the shared tag.

Specifically, the information about the shared tag included in the operation request information includes at least one of the following:
a tag mask, an identifier of the AF 1, identifiers of a plurality of AFs allowed to use each of the at least one tag, an identifier of an AF group allowed to use each of the at least one tag, an operation type of an operation allowed to be performed by each of the plurality of AFs on each tag, an area in which each of the plurality of AFs is allowed to perform an operation on each tag, and the like.

Step S418: The AMF 1 sends an operation instruction to a RAN, where the operation instruction includes a tag mask #1. Specifically, the operation instruction may be sent by using an N2 message, where the N2 message may further include a random access instruction that instructs the reader to broadcast the tag mask #1 to a tag.

Step S420: The RAN broadcasts the tag mask #1, and performs a random access procedure with a tag that meets the tag mask #1.

Step S422: The tag that meets the tag mask #1 reports identification information of the tag to the AMF 1.

Step S424: The AMF 1 performs association mapping between identification information of a fed-back tag and the information about the shared tag.

Step S426: The AMF 1 stores, in the UDM or a UDR, information about the shared tag obtained through the association mapping.

Step S428: The AMF 1 feeds back tag information of an operation to the AF 1, for example, feeds back a tag on which the operation succeeds or a tag on which the operation fails.

In Manner 1 or Manner 2, the core network may obtain the second information corresponding to the first tag. In addition, the core network may also obtain, in Manner 1 or Manner 2, subscription data corresponding to at least one tag below.

Based on the method 400, this application provides a communication method 500 for ensuring data security, as shown in FIG. 5.

Step S510: An AF 2 sends first operation request information to an AMF 2, where the first operation request information is for requesting to perform a first operation on at least one tag. The AMF 2 is an AMF corresponding to the AF 2.

Specifically, the AMF 2 may be an AMF network element, a tag management function (tag management function, TMF) network element, or a network element in which the AMF and the TMF are integrated. This is not limited in this application.

Specifically, the first operation request information includes at least one of the following information:
an identifier of the at least one tag, a tag mask #2, an identifier of the AF 2, an identifier of an AF group to which the AF 2 belongs, an operation area of the first operation, an operation type of the first operation, and the like. The at least one tag includes the first tag.

Specifically, the first operation request information carries either of the identifier of the at least one tag and the tag mask #2.

When the first operation request information carries the identifier of the at least one tag, the communication method 500 may be performed in Manner 1.

### Manner 1:

Optionally, step S512: The AMF 2 determines a tag #4 that belongs to the AF 2 and that is in the at least one tag.

Step S514: The AMF 2 sends first query information to a UDM or a UDR.

The UDM network element may be a UDR network element.

If the AMF 2 performs step S512, the first query information is for querying subscription data of a remaining tag other than the tag #4 in the at least one tag. The first query information is for querying the second information corresponding to the first tag.

Specifically, if the UDM or the UDR includes subscription data queried by using a tag identifier as an index, the AMF 2 may perform step S512.

In this case, the first query information includes at least one of the following information:
an identifier of the remaining tag other than the tag #4 in the at least one tag, the identifier of the AF 2, the identifier of the AF group to which the AF 2 belongs, the operation area of the first operation, the operation type of the first operation, and the like. The first query information includes the first information.

If the AMF 2 does not perform step S512, the first query information is for querying the subscription data of the at least one tag.

Specifically, if the UDM or the UDR includes subscription data queried by using an AF identifier as an index, the AMF 2 may not perform step S512.

In this case, the first query information includes at least one of the following information:
the identifier of the at least one tag, the identifier of the AF 2, the identifier of the AF group to which the AF 2 belongs, the operation area of the first operation, the operation type of the first operation, and the like. The first query information includes the first information.

Step S516: The AMF 2 receives first feedback information from the UDM or the UDR, where the first feedback information is determined based on the first query information. The first feedback information may include one or more of the second information, the first query information, and information about whether a tag is allowed to be used by the AF 2.

Specifically, the AMF 2 may determine, based on the first feedback information, that a tag #5 belongs to a shared tag set, and the tag #5 is allowed to be used by the AF 2. That the tag #5 is allowed to be used by the AF 2 includes that the first operation is allowed to be performed on the tag #5 by the AF 2 and/or that the first operation is allowed to be performed on the tag #5 by the AF 2 in the operation area.

Optionally, step S514 and step S516 may not be performed. When the AMF 2 stores information about whether the at least one tag belongs to the shared tag set and/or the second information corresponding to the at least one tag, for example, a context of the at least one tag or a context of an AF corresponding to the at least one tag exists in the AMF 2, the AMF 2 directly performs step S518 after receiving the first operation request information.

Further, in step S518, the AMF 2 determines, based on the first feedback information, a tag #1 on which the AF 2 is allowed to perform the first operation. The tag #1 includes the tag #4 and the tag #5. The tag #1 includes the first tag.

An implementation is as follows: When the first operation request information includes the operation area of the first operation and/or the operation type of the first operation, but the UDM or the UDR does not store an operation type of an operation allowed to be performed by each of the plurality of AFs on each tag and/or an operation area in which each of the plurality of AFs is allowed to perform an operation on each tag, the AMF 2 may determine that a shared tag in the at least one tag is the tag #1 on which the AF 2 is allowed to perform the first operation.

For example, when the first operation request information includes the operation area of the first operation, but the UDM or the UDR does not store the operation area in which each of the plurality of AFs is allowed to perform an operation on each tag, the AMF 2 may determine that the shared tag in the at least one tag is the tag #1 on which the AF 2 is allowed to perform the first operation.

Step S520: The AMF 2 constructs a tag mask #3 based on the tag #1.

Step S522: The AMF 2 sends an N2 message to a RAN, where the N2 message includes a random access instruction, and the N2 message includes the tag mask #3.

Specifically, the random access instruction is to perform the corresponding first operation based on the operation type of the first operation. For example, the random access instruction may be an operation instruction for performing an inventory operation.

Step S524: The RAN broadcasts the tag mask #3, and performs a random access procedure with a tag that meets the tag mask #3.

Step S526: The tag that meets the tag mask #3 reports identification information of the tag to the AMF 2.

Step S528: The AMF 2 feeds back tag information of an operation to the AF 2, for example, feeds back a tag on which the inventory operation succeeds or a tag on which the inventory operation fails.

When the first operation request information carries the tag mask #2, the communication method 500 may be performed in Manner 2.

### Manner 2:

Step S530: The AMF 2 sends an operation instruction to a RAN, where the operation instruction includes the tag mask #2. Specifically, the operation instruction may be sent by using an N2 message, where the N2 message may further include a random access instruction that instructs a reader to broadcast the tag mask #2 to a tag.

Step S532: The RAN broadcasts the tag mask #2, and performs a random access procedure with a tag that meets the tag mask #2.

Step S534: The tag #2 that meets the tag mask #2 reports identification information of the tag #2 to the AMF 2.

Step S536: The AMF 2 sends second query information to a UDM or a UDR, where the second query information is for querying subscription data of the tag #2. The second query information is for querying second information corresponding to the first tag.

Specifically, the second query information includes at least one of the following information:
an identifier of the tag #2, the identifier of the AF 2, the identifier of the AF group to which the AF 2 belongs, the operation area of the first operation, the operation type of the first operation, and the like. The second query information includes the first information.

Step S538: The AMF 2 receives second feedback information from the UDM or the UDR, where the second feedback information is determined based on the second query information.

Optionally, step S536 and step S538 may not be performed. When the AMF 2 stores information about whether the tag #2 belongs to a shared tag set and/or second information corresponding to the tag #2, for example, a context of the tag #2 or a context of an AF corresponding to the tag #2 exists in the AMF 2, the AMF 2 directly performs step S540 after receiving the identification information of the tag #2 in step S538.

Step S540: The AMF 2 determines, based on the second feedback information, a tag #1 on which the AF 2 is allowed to perform the first operation.

Step S542: The AMF 2 feeds back tag information of the tag #1 to the AF 2.

According to the method 500, an operation performed by an enterprise on a tag needs to be determined by a core network to determine whether the operation can be performed, to ensure data security.

The foregoing embodiment is performed when the AF 1 provides all information included in information about the shared tag for the core network. It is also possible that the AF 1 provides, for the core network, the identifier of the at least one tag, identifiers of a plurality of AFs allowed to use each of the at least one tag, an identifier of an AF group allowed to use each of the at least one tag, and a shared tag indication that are included in the information about the shared tag. However, an operation type of an operation allowed to be performed by each of the plurality of AFs on each tag, an operation area in which each of the plurality of AFs is allowed to perform an operation on each tag, and the like are not provided. This application may further provide a communication method 600 for ensuring data security in this case, as shown in FIG. 6A and FIG. 6B.

Step S610: An AF 2 sends first operation request information to an AMF 2, where the first operation request information is for requesting to perform a first operation on at least one tag. The AMF 2 is an AMF corresponding to the AF 2.

Specifically, the first operation request information includes at least one of the following information:
an identifier of the at least one tag, a tag mask #2, an identifier of the AF 2, an identifier of an AF group to which the AF 2 belongs, an operation area of the first operation, an operation type of the first operation, and the like. The at least one tag includes the first tag.

Specifically, the first operation request information carries either of the identifier of the at least one tag and the tag mask #2.

When the first operation request information carries the identifier of the at least one tag, the communication method 600 may be performed in Manner 1.

### Manner 1:

Optionally, step S612: The AMF 2 determines a tag #4 that belongs to the AF 2 and that is in the at least one tag.

Step S614: The AMF 2 sends third query information to a UDM or a UDR.

If the AMF 2 performs step S612, the third query information is for querying whether a remaining tag other than the tag #4 in the at least one tag is a shared tag, or the third query information is for querying whether a remaining tag other than the tag #4 in the at least one tag belongs to a shared tag set #1, where a tag in the shared tag set #1 is allowed to be used by the AF 2. The third query information is for querying whether the first tag belongs to the shared tag set #1.

Specifically, if the UDM or the UDR includes subscription data queried by using a tag identifier as an index, the AMF 2 may perform step S612.

In this case, the third query information includes at least one of the following information:
an identifier of the remaining tag other than the tag #4 in the at least one tag, the identifier of the AF 2, the identifier of the AF group to which AF 2 belongs, and the like. The third query information includes an identifier of the first tag.

If the AMF 2 does not perform step S612, the third query information is for querying whether the at least one tag is a shared tag, or the third query information is for querying whether the at least one tag belongs to a shared tag set #1, where a tag in the shared tag set #1 is allowed to be used by the AF 2. The third query information is for querying whether the first tag belongs to the shared tag set #1.

Specifically, if the UDM or the UDR includes subscription data queried by using an AF identifier as an index, the AMF 2 may not perform step S612.

In this case, the third query information includes at least one of the following information:
the identifier of the at least one tag, the identifier of the AF 2, the identifier of the AF group to which the AF 2 belongs, and the like. The third query information includes an identifier of the first tag.

Step S616: The AMF 2 receives third feedback information from the UDM or the UDR, where the third feedback information is determined based on the third query information.

Step S618: The AMF 2 determines a shared tag #1 based on the third feedback information, where the shared tag #1 is a tag allowed to be used by the AF 2.

Specifically, the shared tag #1 may include or may not include the tag #4.

For example, some subscription data of the UDM or the UDR is shown in the following Table 4.

**Table 4**

| Tag identifier | Enterprise identifier | Available enterprise identifier |
|---|---|---|
| ID 1 | AF 1 | AF 2 |
| ID 2 | | AF 2 |
| ID 3 | | AF 2 |
| ID 4 | | AF 2 |
| ID 5 | | / |
| ID 6 | AF 2 | / |

For example, four tags, the ID 1, the ID 2, the ID 3, the ID 4, in the five tags, the ID 1, the ID 2, the ID 3, the ID 4, and the ID 5 provided by the AF 1 are allowed to be used by the AF 2. One tag, the ID 5, in the five tags, the ID 1, the ID 2, the ID 3, the ID 4, and the ID 5 provided by the AF 1 is not allowed to be used by the AF 2. One tag, the ID 6, provided by the AF 2 is allowed to be used by the AF 2. Based on this, when the shared tag #1 includes the tag #4, the shared tag #1 includes the ID 1, the ID 2, the ID 3, the ID 4, and the ID 6; or when the shared tag #1 does not include the tag #4, the shared tag #1 includes the ID 1, the ID 2, the ID 3, and the ID 4.

Optionally, step S614 and step S616 may not be performed. When the AMF 2 stores identifiers of a plurality of AFs allowed to use each of the at least one tag or an identifier of an AF group allowed to use each of the at least one tag, the AMF 2 directly performs step S618 after receiving the first operation request information.

An implementation is as follows: When the first operation request information does not include the operation area of the first operation and/or the operation type of the first operation, the AMF 2 may determine that the shared tag #1 is a tag on which the AF 2 is allowed to perform the first operation.

Another implementation is as follows: When the first operation request information includes the operation area of the first operation and/or the operation type of the first operation, the AMF 2 needs to perform the following step S620 to step S624.

Step S620: The AMF 2 sends fourth query information to the AF 1, where the fourth query information is for querying subscription data of the shared tag #1.

Specifically, if the AMF 2 is not an AMF serving the AF 1, the AMF 2 sends the fourth query information to the AMF 1, and the AMF 1 sends the fourth query information to the AF 1.

The fourth query information includes at least one of the following information:
an identifier of the shared tag #1, the operation area of the first operation, the operation type of the first operation, and the like. The fourth query information includes the first information.

Step S622: The AF 1 determines, based on the fourth query information, whether the AF 2 is allowed to perform the first operation on a tag in the shared tag #1.

Specifically, the AF 1 may determine, depending on whether the fourth query information meets the subscription data of the shared tag #1, whether the AF 2 is allowed to perform the first operation on the tag in the shared tag #1.

Step S624: The AF 1 sends fourth feedback information to the AMF 2.

Specifically, if the AMF 2 is not an AMF serving the AF 1, the AF 1 sends the fourth feedback information to the AMF 1, and the AMF 1 sends the fourth feedback information to the AMF 2.

Specifically, the fourth feedback information may indicate a tag that is in the shared tag #1 and on which the AF 2 is allowed to perform the first operation.

Step S626: The AMF 2 determines, based on the fourth feedback information, the tag #1 on which the AF 2 is allowed to perform the first operation.

Specifically, when the shared tag #1 does not include the tag #4, the tag #1 includes the tag that is in the shared tag #1 and on which the fourth feedback information indicates that the AF 2 is allowed to perform the first operation and the tag #4; or when the shared tag #1 includes the tag #4, the tag #1 includes the tag that is in the shared tag #1 and on which the fourth feedback information indicates that the AF 2 is allowed to perform the first operation.

Step S628: The AMF 2 constructs a tag mask #3 based on the tag #1.

Step S630: The AMF 2 sends an N2 message to a RAN, where the N2 message includes a random access instruction, and the N2 message includes the tag mask #3.

Specifically, the random access instruction is to perform the corresponding first operation based on the operation type of the first operation. For example, the random access instruction may be an operation instruction for performing an inventory operation.

Step S632: The RAN broadcasts the tag mask #3, and performs a random access procedure with a tag that meets the tag mask #3.

Step S634: The tag that meets the tag mask #3 reports identification information of the tag to the AMF 2.

Step S636: The AMF 2 feeds back tag information of an operation to the AF 2, for example, feeds back a tag on which the inventory operation succeeds or a tag on which the inventory operation fails.

When the first operation request information carries the tag mask #2, the communication method 600 may be performed in Manner 2.

### Manner 2:

Step S638: The AMF 2 sends an operation instruction to a RAN, where the operation instruction includes the tag mask #2. Specifically, the operation instruction may be sent by using an N2 message, where the N2 message may further include a random access instruction that instructs a reader to broadcast the tag mask #2 to a tag.

Step S640: The RAN broadcasts the tag mask #2, and performs a random access procedure with a tag that meets the tag mask #2.

Step S642: The tag #2 that meets the tag mask #2 reports identification information of the tag #2 to the AMF 2.

Step S644: The AMF 2 sends fifth query information to the UDM or the UDR, where the fifth query information is for querying whether a tag in the tag #2 is a shared tag, or the fifth query information is for querying whether a tag in the tag #2 belongs to a shared tag set #2, where a tag in the shared tag set #2 is allowed to be used by the AF 2. The fifth query information is for querying whether the first tag belongs to the shared tag set #2.

The fifth query information includes at least one of the following information:
an identifier of the tag #2, the identifier of the AF 2, the identifier of the AF group to which the AF 2 belongs, and the like. The fifth query information includes an identifier of the first tag.

For step S646 to step S656, refer to step S616 to step S626 in Manner 1. Details are not described herein again.

Step S658: The AMF 2 feeds back tag information of the tag #1 to the AF 2.

According to the method 600, in a case in which the AF 1 does not provide all subscription data of the shared tag for a core network, an operation request of another enterprise may be determined, to ensure data security.

For the tag in the foregoing embodiment, refer to an existing tag. This application may further provide an enhanced tag that can assist in ensuring data security. The enhanced tag may be applied by using the following method 700.

Step S710: An AF 2 sends first operation request information to an AMF 2, where the first operation request information is for requesting to perform a first operation on at least one tag. The at least one tag includes the first tag, and the AMF 2 is an AMF corresponding to the AF 2.

Specifically, the first operation request information includes at least one of the following information:
an identifier of the at least one tag, a tag mask #2, an identifier of the AF 2, an identifier of an AF group to which the AF 2 belongs, an operation area of the first operation, an operation type of the first operation, and the like.

Optionally, in step S712, if the first operation request information carries a tag identifier instead of the tag mask #2, the AMF 2 may construct the tag mask #2 based on the identifier of the at least one tag.

Step S714: The AMF 2 sends a first operation instruction to the tag through a RAN, where the first operation instruction includes the tag mask #2, the identifier of the AF 2, or the identifier of the AF group to which the AF 2 belongs.

Step S716: The RAN broadcasts third information to the tag, where the third information includes the identifier of the AF 2 or the identifier of the AF group to which the AF 2 belongs.

Optionally, the third information includes the tag mask #2. The identifier of the AF 2 or the identifier of the AF group to which the AF 2 belongs may be sent in the tag mask #2, or sent separately.

Step S718: The tag determines whether configuration information of the tag includes the identifier of the AF 2 or the identifier of the AF group to which the AF 2 belongs.

Specifically, the configuration information may be stored in the tag identifier. A tag identifier design may include one or more of a network identifier, a user identifier, and a serial number. The network identifier is for distinguishing between tags of different operators, to prevent a base station from performing inventory on a tag of another operator. The user identifier is for filtering out a tag provided by a non-enterprise user, to avoid unauthorized inventory of an enterprise. The serial number is for identifying different tags. A current serial number may be an electronic product code (electronic product code, EPC), a testing identifier (testing identifier, TID), a mobile subscriber identifier number (mobile subscriber identifier number, MSIN), and the like.

An example in which the serial number is the EPC is used. A configuration of the tag may be as follows:
*< PLMN ID >< NID* >< user identifier >< user identifier list *>< SUPI type > < assignment mode >< category >< EPC >*

*< PLMN ID >< NID* > is a network identifier, and either *< PLMN ID >* or < *NID >* is selected in the configuration of the tag. < user identifier > indicates an AF identifier, and < user identifier list > may be a list of AF identifiers or a list of AF group identifiers. In the configuration of the tag, either < user identifier > or < user identifier list > may be selected to use or both < user identifier > and < user identifier list > may be used. When only < user identifier > is used, it indicates that the tag can be used by one enterprise. When only < user identifier list > is used, it indicates that the tag can be used by at least one enterprise, and < user identifier list > may be an AF identifier or an AF group identifier. When < user identifier > and < user identifier list > are used, it indicates that the tag can be used by a plurality of enterprises, and < user identifier list > is an AF group identifier. It should be understood that combination elements in the foregoing examples are all optional.

Alternatively, the configuration information may be further stored in a storage area of the tag.

Step S720: The tag including, in the configuration of the tag, the identifier of the AF 2 or the tag of the identifier of the AF group to which the AF 2 belongs performs a random access procedure with the RAN.

Step S722: The tag that completes the random access procedure with the RAN sends first indication information to the AMF 2.

Specifically, the first indication information indicates that the tag is allowed to be used by the AF 2, and the first indication information may be identification information of the tag.

Step S724: The AMF 2 determines a shared tag #3 based on the first indication information.

For subsequent steps, refer to step S536 to step S542 in the method 500, or refer to step S650 to step S658 in the method 600. Details are not described herein again.

According to the foregoing method 700, an operation performed by an enterprise on a tag needs to be determined by both the tag and a core network or an AF 1 to determine whether the operation can be performed, to ensure data security.

It should be understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, the method and the operation implemented by the device (such as a transmit-end device or a receive-end device) may also be implemented by a component (for example, a chip or a circuit) of the device.

The foregoing describes in detail the methods provided in embodiments of this application with reference to FIG. 1 and FIG. 7. The foregoing method is mainly described from a perspective of interaction between a core network element, an application function network element, and a tag. It may be understood that, to implement the foregoing functions, the core network element, the application function network element, and the tag include corresponding hardware structures and/or software modules for performing the functions.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail communication apparatuses provided in embodiments of this application with reference to FIG. 8 to FIG. 10. It should be understood that descriptions of apparatus embodiments correspond to the descriptions of the method embodiments. Therefore, for content that is not described in detail, refer to the foregoing method embodiments. For brevity, some content is not described again. In embodiments of this application, functional modules of the transmit-end device or the receive-end device may be obtained through division based on the foregoing method examples. For example, functional modules may be obtained through division based on functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

The foregoing describes in detail the communication methods provided in this application. The following describes communication apparatuses provided in this application. In a possible implementation, the apparatuses are configured to implement the steps or procedures corresponding to the first network element in the foregoing method embodiments. In another possible implementation, the apparatuses are configured to implement the steps or procedures corresponding to the first application function network element in the foregoing method embodiments. In yet another possible implementation, the apparatuses are configured to implement the steps or procedures corresponding to the second application function network element in the foregoing method embodiments.

FIG. 8 is a block diagram of a communication apparatus 800 according to an embodiment of this application. As shown in FIG. 8, the apparatus 800 may include a communication unit 810 and a processing unit 820. The communication unit 810 may communicate with external, and the processing unit 820 is configured to perform information processing. The communication unit 810 may also be referred to as a communication interface or a transceiver unit.

In a possible design, the apparatus 600 may implement steps or procedures performed by a core network and an AMF 1, an AMF 2, or a UDM included in the core network in the foregoing method embodiments. The processing unit 820 is configured to perform processing-related operations of the core network and the AMF 1, the AMF 2, or the UDM included in the core network in the foregoing method embodiments. The communication unit 810 is configured to perform sending-related operations of the core network and the AMF 1, the AMF 2, or the UDM included in the core network in the foregoing method embodiments.

In still another possible design, the apparatus 800 may implement steps or procedures performed by a first application function network element, an AF 2, or a second application function network element in the foregoing method embodiments. The communication unit 810 is configured to perform receiving-related operations of the first application function network element, the AF 2, or the second application function network element in the foregoing method embodiments. The processing unit 820 is configured to perform processing-related operations of the first application function network element, the AF 2, or the second application function network element in the foregoing method embodiments.

In yet another possible design, the apparatus 800 may implement steps or procedures performed by a third application function network element or an AF 1 in the foregoing method embodiments. The communication unit 810 is configured to perform receiving-related operations of the third application function network element or the AF 1 in the foregoing method embodiments. The processing unit 820 is configured to perform processing-related operations of the third application function network element or the AF 1 in the foregoing method embodiments.

It should be understood that the apparatus 800 herein is presented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the AMF 1, the AMF 2, or the UDM in the foregoing embodiments, and may be configured to perform procedures and/or steps corresponding to the AMF 1, the AMF 2, or the UDM in the foregoing method embodiments. Alternatively, the apparatus 800 may be specifically the AF 2 in the foregoing embodiments, and may be configured to perform procedures and/or steps corresponding to the AF 2 in the foregoing method embodiments, or the apparatus 800 may be specifically the AF 1 in the foregoing embodiments, may be configured to perform procedures and/or steps corresponding to the AF 1 in the foregoing method embodiments. To avoid repetition, details are not described herein again.

The apparatus 800 in the foregoing solutions has a function of implementing corresponding steps performed by the AMF 1, the AMF 2, or the UDM in the foregoing methods, or the apparatus 800 in the foregoing solutions has a function of implementing corresponding steps performed by the AF 2 in the foregoing methods, or the apparatus 800 in the foregoing solutions has a function of implementing corresponding steps performed by the AF 1 in the foregoing methods. The function may be implemented by hardware, or may be implemented by hardware executing corresponding software. The hardware or software includes one or more modules corresponding to the foregoing function. For example, the communication unit may be replaced with a transceiver machine (for example, a sending unit of the communication unit may be replaced with a transmitter machine, and a receiving unit of the communication unit may be replaced with a receiver machine), and another unit such as the processing unit may be replaced with the processor, to separately perform sending/receiving operations and processing-related operations in the method embodiments.

In addition, alternatively, the communication unit may be a transceiver circuit (for example, may include a receiving circuit and a sending circuit), and the processing unit may be a processing circuit. In this embodiment of this application, the apparatus in FIG. 8 may be the AMF 1, the AMF 2, the UDM, the AF 2, or the AF 1 in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 9 is a block diagram of a communication apparatus 900 according to an embodiment of this application. The apparatus 900 includes a processor 910 and a transceiver 920. The processor 910 and the transceiver 920 communicate with each other by using an internal connection path. The processor 910 is configured to execute instructions, to control the transceiver 920 to send a signal and/or receive a signal.

Optionally, the communication apparatus 900 may further include a memory 930. The memory 930 communicates with the processor 910 and the transceiver 920 by using the internal connection path. The memory 930 is configured to store instructions. The processor 910 may execute the instructions stored in the memory 930. In a possible implementation, the apparatus 900 is configured to implement procedures and steps corresponding to an AMF 1, an AMF 2, or a UDM in the foregoing method embodiments. In another possible implementation, the apparatus 900 is configured to implement procedures and steps corresponding to an AF 2 in the foregoing method embodiments. In yet another possible implementation, the apparatus 900 is configured to implement procedures and steps corresponding to an AF 1 in the foregoing method embodiments.

It should be understood that the apparatus 900 may be specifically the AMF 1, the AMF 2, the UDM, the AF 2, or the AF 1 in the foregoing embodiments, or may be a chip or a chip system. Correspondingly, the transceiver 920 may be a transceiver circuit of the chip. This is not limited herein. Specifically, the apparatus 900 may be configured to perform steps and/or procedures corresponding to the AMF 1, the AMF 2, the UDM, the AF 2, or the AF 1 in the foregoing method embodiments. Optionally, the memory 930 may include a read-only memory and a random access memory, and provide instructions and data for the processor. A part of the memory may further include a non-volatile random access memory. For example, the memory may further store information about a device type. The processor 910 may be configured to execute the instructions stored in the memory. When the processor 910 executes the instructions stored in the memory, the processor 910 is configured to perform steps and/or procedures corresponding to the AMF 1, the AMF 2, the UDM, the AF 2, or the AF 1 in the foregoing method embodiments.

In an implementation process, steps in the foregoing methods can be implemented by using a hardware integrated logic circuit in the processor, or by using instructions in a form of software. The steps in the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification is intended to include, but is not limited to, these memories and any memory of another appropriate type.

It should be noted that when the processor is a general-purpose processor, a DSP, an ASIC, an FPGA or another programmable logic device, a discrete gate or a transistor logic device, or a discrete hardware component, the memory (storage module) may be integrated into the processor. It should be further noted that the memory described in this specification is intended to include, but is not limited to, these memories and any memory of another appropriate type.

FIG. 10 is a diagram of a chip system 1000 according to an embodiment of this application. The chip system 1000 (or may be referred to as a processing system) includes a logic circuit 1010 and an input/output interface (input/output interface) 1020.

The logic circuit 1010 may be a processing circuit in the chip system 1000. The logic circuit 1010 may be coupled to and connected to a storage unit, and invokes instructions in the storage unit, to cause the chip system 1000 to implement the method and function in embodiments of this application. The input/output interface 1020 may be an input/output circuit in the chip system 1000, and outputs information processed by the chip system 1000, or inputs to-be-processed data or signaling into the chip system 1000 for processing.

Specifically, for example, if the chip system 1000 is installed in an AMF 2, the logic circuit 1010 is coupled to the input/output interface 1020, and the logic circuit 1010 may send first query information through the input/output interface 1020. The first query information may be generated by the logic circuit 1010. For another example, if the chip system 1000 is installed in an AF 2, the logic circuit 1010 is coupled to the input/output interface 1020, and the logic circuit 1010 may send first request operation information through the input/output interface 1020.

In a solution, the chip system 1000 is configured to implement operations performed by an AMF 1, the AMF 2, or a UDM in the foregoing method embodiments.

For example, the logic circuit 1010 is configured to implement processing-related operations performed by the AMF 1, the AMF 2, or the UDM in the foregoing method embodiments, for example, processing-related operations performed by the AMF 1, the AMF 2, or the UDM in the embodiment shown in FIG. 4, FIG. 5, FIG. 6A and FIG. 6B, or FIG. 7. The input/output interface 1020 is configured to implement sending and/or receiving-related operations performed by the AMF 1, the AMF 2, or the UDM in the foregoing method embodiments, for example, processing-related operations performed by the AMF 1, the AMF 2, or the UDM in the embodiment shown in FIG. 4, FIG. 5, FIG. 6A and FIG. 6B, or FIG. 7.

In another solution, the chip system 1000 is configured to implement operations performed by the AF 2 in the foregoing method embodiments.

For example, the logic circuit 1010 is configured to implement processing-related operations performed by the AF 2 in the foregoing method embodiments, for example, processing-related operations performed by the AF 2 in the embodiment shown in FIG. 4, FIG. 5, FIG. 6A and FIG. 6B, or FIG. 7. The input/output interface 1020 is configured to implement sending and/or receiving-related operations performed by the AF 2 in the foregoing method embodiments, for example, processing-related operations performed by the AF 2 in the embodiment shown in FIG. 4, FIG. 5, FIG. 6A and FIG. 6B, or FIG. 7.

In addition, this application further provides a computer-readable storage medium. The computer-readable storage medium stores computer instructions, and when the computer instructions are run on a computer, operations and/or procedures performed by an AMF 1, an AMF 2, a UDM, an AF 2, or an AF 1 in method embodiments of this application are performed.

This application further provides a computer program product. The computer program product includes computer program code or instructions. When the computer program code or the instructions are run on a computer, operations and/or procedures performed by an AMF 1, an AMF 2, a UDM, an AF 2, or an AF 1 in method embodiments of this application are performed.

In addition, this application further provides a communication system, including an AMF 1, an AMF 2, a UDM, an AF 2, or an AF 1 in embodiments of this application.

It should be further noted that the memory described in this specification is intended to include, but not limited to, these memories and any memory of another appropriate type.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be further understood that ordinal numbers such as "first" and "second" in embodiments of this application are for distinguishing between a plurality of objects, but are not intended to limit a size, content, an order, a time sequence, priorities, importance of the plurality of objects, or the like. For example, first information and second information do not indicate a difference in an information amount, content, a priority, importance, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in this application, "at least one" means one or more, and "a plurality of" means two or more. "At least one of items (pieces)" or a similar expression thereof refers to one item (piece) or a plurality of items (pieces), that is, any combination of these items, including any combination of a singular item (piece) or plural items (pieces). For example, at least one of a, b, or c may represent a, b, c, a and b, a and c, b and c, or a, b, and c.

It should be further understood that, unless otherwise specified, a meaning similar to "an item includes one or more of the following: A, B, and C" in this application usually means that the item may be any one of the following: A; B; C; A and B; A and C; B and C; A, B and C; A and A; A, A and A; A, A and B; A, A and C; A, B and B; A, C and C; B and B, B, B and B, B, B and C, C and C; C, C and C, and other combinations of A, B, and C. The foregoing uses three elements A, B, and C as an example to describe an optional case of the item. When an expression is "an item includes at least one of the following: A, B, ..., and X", that is, when more elements are included in the expression, a case to which the item is applicable may also be obtained according to the foregoing rule.

It should be further understood that the term "and/or" in this specification describes only an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving first operation request information from a first application function network element, and receiving second operation request information from a second application function network element, wherein the first operation request information is for requesting to perform a first operation on a first passive terminal, and the second operation request information is for requesting to perform a second operation on the first passive terminal; and
determining that the first passive terminal belongs to a set of shared terminals, and performing the first operation and the second operation, wherein the set of shared terminals comprises at least the first passive terminal, and the first passive terminal in the set of shared terminals is allowed to be used by the first application function network element and the second application function network element.

2. The method according to claim 1, wherein the first operation request information comprises first information, and the first information comprises at least one of the following information: an identifier of the first application function network element, an identifier of an application function network element group to which the first application function network element belongs, an identifier of the first passive terminal, an operation area of the first operation, and an operation type of the first operation; and
the performing the first operation comprises:
determining that the first information meets second information corresponding to the first passive terminal, and performing the first operation.

3. The method according to claim 2, wherein the second information further comprises at least one of the following information:
an identifier of a third application function network element to which the first passive terminal belongs, identifiers of a plurality of application function network elements allowed to use the first passive terminal, an identifier of an application function network element group allowed to use the first passive terminal, an operation type of an operation allowed to be performed by each of the plurality of application function network elements on the first passive terminal, and an operation area in which each of the plurality of application function network elements is allowed to perform an operation on the first passive terminal.

4. The method according to claim 2 or 3, wherein the determining that the first passive terminal belongs to the set of shared terminals comprises:
sending, by an access and mobility management network element, first query information to a unified data management network element, wherein the first query information is for querying the second information corresponding to the first passive terminal;
receiving, by the access and mobility management network element, first feedback information from the unified data management network element, wherein the first feedback information is determined based on the first query information; and
determining, by the access and mobility management network element based on the first feedback information, that the first passive terminal belongs to the set of shared terminals.

5. The method according to claim 2 or 3, wherein determining that the first passive terminal belongs to the set of shared terminals comprises:
sending, by an access and mobility management network element, a first operation instruction, wherein the first operation instruction comprises the identifier of the first application function network element or the identifier of the application function network element group to which the first application function network element belongs;
receiving, by the access and mobility management network element, first indication information from the first passive terminal, wherein the first indication information indicates that the first passive terminal is allowed to be used by the first application function network element, and the first passive terminal is configured with the identifiers of the plurality of application function network elements allowed to use the first passive terminal and/or the identifier of the application function network element group allowed to use the first passive terminal; and
determining, by the access and mobility management network element based on the first indication information, that the first passive terminal belongs to the set of shared terminals.

6. The method according to claim 4 or 5, wherein the performing the first operation further comprises:
determining, by the access and mobility management network element based on the first feedback information, that the first information meets the second information corresponding to the first passive terminal, and performing the first operation.

7. The method according to any one of claims 2 to 5, wherein the performing the first operation further comprises:
sending, by the access and mobility management network element, fourth query information to a fourth application function network element, wherein the fourth query information is used by the fourth application function network element to determine to allow the first application function network element to perform the first operation on the first passive terminal, and the fourth query information comprises the first information;
receiving, by the access and mobility management network element, fourth feedback information from the fourth application function network element, wherein the fourth feedback information indicates that the first operation is allowed to be performed; and
performing, by the access and mobility management network element, the first operation based on the fourth feedback information.

8. A communication method, wherein the method comprises:
receiving, by a first passive terminal, third information from an access network device, wherein the third information comprises an identifier of a first application function network element or an identifier of an application function network element group to which the first application function network element belongs, and the first application function network element is an application function network element that requests to perform a first operation on the first passive terminal; and
sending, by the first passive terminal, first indication information based on the third information, wherein the first indication information indicates that the first passive terminal is allowed to be used by the first application function network element, and the first passive terminal is configured with identifiers of a plurality of application function network elements allowed to use the first passive terminal and/or an identifier of an application function network element group allowed to use the first passive terminal.

9. A communication apparatus, wherein the apparatus comprises:
a communication unit, configured to receive first operation request information from a first application function network element, and configured to receive second operation request information from a second application function network element, wherein the first operation request information is for requesting to perform a first operation on a first passive terminal, and the second operation request information is for requesting to perform a second operation on the first passive terminal; and
a processing unit, configured to determine that the first passive terminal belongs to a set of shared terminals, and configured to perform the first operation and the second operation, wherein the set of shared terminals comprises at least the first passive terminal, and the first passive terminal in the set of shared terminals is allowed to be used by the first application function network element and the second application function network element.

10. The apparatus according to claim 9, wherein the first operation request information comprises first information, and the first information comprises at least one of the following: an identifier of the first application function network element, an identifier of an application function network element group to which the first application function network element belongs, an identifier of the first passive terminal, an operation area of the first operation, and an operation type of the first operation; and
that the processing unit is configured to perform the first operation comprises:
the processing unit is configured to determine that the first information meets second information corresponding to the first passive terminal, and is configured to perform the first operation.

11. The apparatus according to claim 10, wherein the second information comprises at least one of the following information:
an identifier of a third application function network element to which the first passive terminal belongs, identifiers of a plurality of application function network elements allowed to use the first passive terminal, an identifier of an application function network element group allowed to use the first passive terminal, an operation type of an operation allowed to be performed by each of the plurality of application function network elements on the first passive terminal, and an operation area in which each of the plurality of application function network elements is allowed to perform an operation on the first passive terminal.

12. The apparatus according to claim 10 or 11, wherein that the processing unit is configured to determine that the first passive terminal belongs to the set of shared terminals comprises:
the communication unit is further configured to send first query information to a unified data management network element, wherein the first query information is for querying the second information corresponding to the first passive terminal;
the communication unit is further configured to receive first feedback information from the unified data management network element, wherein the first feedback information is determined based on the first query information; and
the processing unit is further configured to determine, based on the first feedback information, that the first passive terminal belongs to the set of shared terminals.

13. The apparatus according to claim 10 or 11, wherein that the processing unit is configured to determine that the first passive terminal belongs to the set of shared terminals comprises:
the communication unit is configured to send a first operation instruction, wherein the first operation instruction comprises the identifier of the first application function network element or the identifier of the application function network element group to which the first application function network element belongs;
the communication unit is further configured to receive first indication information from the first passive terminal, wherein the first indication information indicates that the first passive terminal is allowed to be used by the first application function network element, and the first passive terminal comprises the identifiers of the plurality of application function network elements allowed to use the first passive terminal and/or the identifier of the application function network element group allowed to use the first passive terminal; and
the processing unit is further configured to determine, based on the first indication information, that the first passive terminal belongs to the set of shared terminals.

14. The apparatus according to claim 12 or 13, wherein that the processing unit is configured to perform the first operation further comprises:
the processing unit is configured to determine, based on the first feedback information, that the first information meets the second information corresponding to the first passive terminal, and is configured to perform the first operation.

15. The apparatus according to any one of claims 10 to 13, wherein that the processing unit is configured to perform the first operation further comprises:
the communication unit is further configured to send fourth query information to a fourth application function network element, wherein the fourth query information is used by the fourth application function network element to determine to allow the first application function network element to perform the first operation on the first passive terminal, and the fourth query information comprises the first information;
the communication unit is further configured to receive fourth feedback information from the fourth application function network element, wherein the fourth feedback information indicates that the first operation is allowed to be performed; and
the processing unit is further configured to perform the first operation based on the fourth feedback information.

16. A communication apparatus, wherein the apparatus comprises:
a communication unit, configured to receive third information from an access network device, wherein the third information comprises an identifier of a first application function network element or an identifier of an application function network element group to which the first application function network element belongs, and the first application function network element is an application function network element that requests to perform a first operation on the apparatus; and
the communication unit is further configured to send first indication information based on the third information, wherein the first indication information indicates that the apparatus is allowed to be used by the first application function network element, and the apparatus comprises identifiers of a plurality of application function network elements allowed to use the apparatus and/or an identifier of an application function network element group allowed to use the apparatus.

17. A communication apparatus, comprising a module or a unit configured to perform the method according to any one of claims 1 to 8.

18. A communication apparatus, comprising a processor, wherein the processor is configured to execute computer instructions stored in a memory, to cause the apparatus to perform the method according to any one of claims 1 to 7 or the method according to claim 8.

19. A communication apparatus, wherein the apparatus comprises a logic circuit and an input/output interface, and the logic circuit is coupled to the input/output interface, and is configured to transmit data through the input/output interface, to perform the method according to any one of claims 1 to 7 or the method according to claim 8.

20. A computer-readable storage medium, wherein the computer-readable storage medium stores computer instructions, and when the computer instructions are run on a computer, the method according to any one of claims 1 to 7 is performed, or the method according to claim 8 is performed.

21. A computer program product, comprising a computer program, wherein when the computer program is executed, the method according to any one of claims 1 to 7 is performed, or the method according to claim 8 is performed.

22. A chip, wherein the chip comprises a processor and a communication interface, and the processor reads, through the communication interface, instructions stored in a memory, to perform the method according to any one of claims 1 to 7 or the method according to claim 8.

23. A communication system, wherein the communication system comprises a core network device and a first passive terminal, the core network device is configured to perform the method according to any one of claims 1 to 7, and the first passive terminal is configured to perform the method according to claim 8.
